# EUROPEAN PATENT APPLICATION

(11) **EP 1 638 222 A1**
(43) Date of publication of application: **22.03.2006**
(21) Application number: 04771369.8
(22) Date of filing: 06.08.2004
(51) Int. Cl.: H04B 7/26

(54) **MOBILE STATION APPARATUS AND LINE QUALITY REPORT VALUE CONTROL METHOD**

(30) Priority: 08.08.2003 JP 2003290700
(71) Applicant: MATSUSHITA ELECTRIC INDUSTRIAL CO., LTD., Kadoma-shi, Osaka 571-8501 (JP)
(72) Inventor: HIRAKI, Toshiaki, Nomi-gun, Ishikawa 929-0064 (JP); SHINOI, Kenichiro, Kanagawa 223-0064 (JP)
(74) Representative: Grünecker, Kinkeldey, Stockmair & Schwanhäusser Anwaltssozietät
(86) International application number: PCT/JP2004/011370
(87) International publication number: WO 2005/015779

(57) **Abstract**

A mobile station apparatus is provided that allows efficient performance of processing related to CQI and reduces unnecessary power consumption and interference against other mobile stations. In this mobile station apparatus, a signaling detector (71) detects a timing the HSDPA serving cell changes, that is, a timing the base station being the destination of a channel quality indicator changes to another base station, and reports the change timing and the detection timing at which the change timing is detected to a controller (72) . When the change timing comes between an SIR measurement start timing and a CQI transmission end timing, the controller (72) controls the generating of CQI in a CQI generator (60) and transmission of CQI in a transmitter (80) according to the detection timing in the signaling detector (71).

## Description

### Technical Field

The present invention relates to a mobile station apparatus and channel quality indicator control method.

### Background Art

Presently, for mobile communications systems, various discussions are ongoing regarding application of a technology called HSDPA (High Speed Downlink Packet Access) to data transmission between the base station apparatus (hereinafter "base station") and the mobile station apparatus (hereinafter "mobile station") . HSDPA is a technology for which standardization by 3GPP (3rd Generation Partnership Project) is in progress. HSDPA allows improved downlink throughput from the base station to the mobile station utilizing adaptive modulation, H-ARQ (Hybrid-Automatic Repeat reQuest), high speed selection of communicating mobile stations, and adaptive transmission parameter control in accordance with the conditions of radio channels.

Channels that are commonly used in HSDPA include HS-SCCH (Shared Control Channel for HS-DSCH (High Speed Downlink Shared Channel)), HS-PDSCH (High Speed Physical Downlink Shared Channel), and HS-DPCCH (Dedicated Physical Control Channel (uplink) for HS-DSCH). The HS-SCCH is a downlink control channel formed with sub-frames of three slots each. Control information representing, for example, the modulation scheme for the HS-PDSCH, the number of multi-codes, and the transport block size, is transmitted through the HS-SCCH from the base station to the mobile station. The HS-PDSCH is a downlink data channel formed with sub-frames of three slots each and carries packet data. The HS-DPCCH is an uplink control channel formed with sub-frames of three slots each and carries feedback signals associated with the HS-PDSCH. In an HS-DPCCH sub-frame, an ACK (ACKnowledgement) or NACK (Negative ACKnowledgement) signal for H-ARQ operation is transmitted in the first slot and a downlink CQI (Channel Quality Indicator) is transmitted in the second and third slots. As for the H-ARQ ACK or NACK signal, an ACK signal is transmitted to the base station of the cell providing HSDPA services ("HSDPA serving cell") when the decoding result of the HS-PDSCH associated with the above HS-DPCCH contains no error and is good, and a NACK signal is transmitted when the decoding result contains an error and is no good. The CQI is used to report transmission quality on downlink channels in the reference measurement period to the base station of the HSDPA serving cell. Generally, a CQI represents a number that is associated with transmission quality and that specifies a particular combination of a modulation scheme and coding factor that allow proper demodulation in the mobile station with this transmission quality. The base station performs scheduling with reference to this CQI, determines the mobile station to transmit packet data to through the HS-PDSCH, and transmits the packet data through the HS-PDSCH to this mobile station at a transmission rate in accordance with the CQI. The structures of these channels are disclosed, for example, in non-patent literature 1 below. Non-patent Document 1: 3GPP TS 25.211 V5.4.0 (3rd Generation Partnership Project; Technical Specification Group Radio Access Network; Physical channels and mapping of transport channels onto physical channels (FDD) (Release 5))

### Disclosure of Invention

### Problems to be Solved by the Invention

The mobile station provided HSDPA services is given various types of signaling from higher layers. Signaling is given from higher layers to the mobile station to indicate, for example, the count of ACK or NACK signal retransmission, gap timing in compressed mode (start timing and gap length), the timing the HSDPA serving cell changes, and the timing the base station of the HSDPA serving cell changes transmit diversity mode.

The mobile station of heretofore detects such signaling and yet performs generating and transmission of CQIs without taking into account the information represented in the signaling, and so the CQI generating and transmission process is inefficient and consumes power more than necessary. Moreover, inefficient CQI transmission often increases interference against other mobile stations.

It is therefore an object of the present invention to provide a mobile station apparatus and channel quality indicator control method that allow efficient performance of processing related to CQI and reduce unnecessary power consumption and interference against other mobile stations.

### Means for solving the problem

In accordance with one aspect of the present invention, a mobile station apparatus employs a configuration having: a generator that generates a downlink channel quality indicator based on reception quality of a received signal; a transmitter that transmits the downlink channel quality indicator; a detector that detects a change timing a base station apparatus of a destination of the downlink channel quality indicator changes from a first base station apparatus to a second base station apparatus; and a controller that controls one or both of the generating process in the generator and the transmission process in the transmitter according to a detection timing in the detector, when the change timing comes between a measurement start timing of the reception quality and a transmission end timing of the downlink channel quality indicator.

By virtue of the above configuration, when the change timing the base station apparatus being the destination of the channel quality indicator changes comes between the reception quality measurement start timing and the channel quality indicator transmission end timing, the generating and transmission of the channel quality indicator are controlled according to the detection timing at which the change timing is detected, thereby allowing efficient performance of the generating and transmission of the channel quality indicator.

### Advantageous Effect of the invention

The present invention reduces unnecessary power consumption in the mobile station and interference against other mobile stations.

### Brief Description of Drawings

FIG.1 is a block diagram showing a configuration of a mobile station according to an embodiment of the present invention;
FIG.2 is a process flowchart of a mobile station according to the present embodiment; and
FIG.3 illustrates transmission and reception timings of channels in a mobile station according to the present invention.

### Best Mode for Carrying Out the Invention

In HSDPA, when the HSDPA serving cell changes during the period after the mobile station measures downlink transmission quality until transmitting a CQI, the cell in which transmission quality was measured and the cell to which the CQI is going to be transmitted will be different. At the base station receiving the CQI after the HSDPA serving cell changes, the CQI will serve no purpose. At the mobile station, the power used to transmit the CQI will be a waste. In addition, transmitting purposeless CQIs such as above increases interference against other mobile stations. The mobile station according to the present invention is therefore designed to reduce power consumption and interference against other mobile stations as will be described hereinafter. Now, an embodiment of the present invention will be described below in detail with reference to the accompanying drawings.

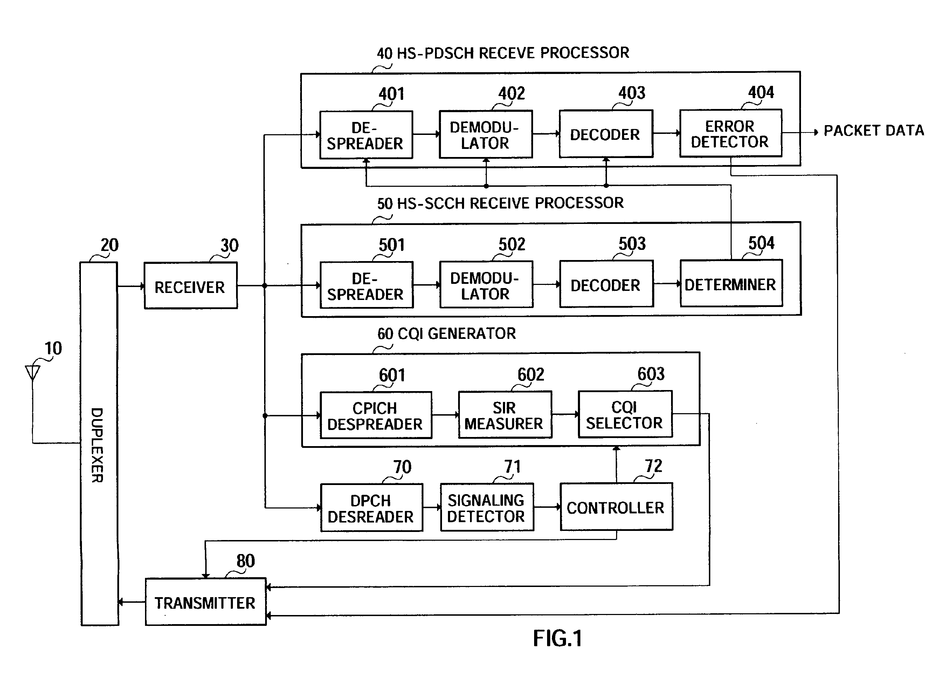

FIG.1 is a block diagram showing the configuration of a mobile station according to an embodiment of the present invention. In the mobile station shown in FIG.1, a signal transmitted from the base station is received by receiver 30 via antenna 10 and duplexer 20. Receiver 30 performs predetermined radio processing upon this signal including down-conversion. Received signals after radio processing are inputted into HS-PDSCH receive processor 40, HS-SCCH receive processor 50, CQI generator 60, and DPCH despreader 70. The received signals include an HS-PDSCH signal, HS-SCCH signal, CPICH signal, and DPCH signal.

HS-SCCH receive processor 50 has despreader 501, demodulator 502, decoder 503, and determiner 504, and performs receive processing on the HS-SCCH transmitted from the base station. As for the HS-SCCH, multiple HS-SCCHs are contained in a set (i.e. HS-SCCH set) . Each HS-SCCH carries information as to which mobile station the HS-SCCH is for, and carries, in addition, control information that is necessary to receive the packet data transmitted on the HS-PDSCH, including the modulation scheme of the HS-PDSCH, the number of multi-codes, and transport block size. Despreader 501 despreads the HS-SCCHs in the HS-SCCH set using respective, predetermined spreading codes. The HS-SCCHs after the despreading are demodulated in demodulator 502, decoded in decoder 503, and the decoding results are inputted into determiner 504. Given these decoding results, determiner 504 determines whether or not there is an HS-SCCH for the mobile station among the multiple HS-SCCHs in the HS-SCCH set. If as a result of determination there is an HS-SCCH for the mobile station, determiner 504 sends spreading code information including the number of multi-codes to despreader 401, modulation scheme information including the modulation scheme to demodulator 402, and coding information including the transport block size to decoder 403, all represented in the control information of the HS-SCCH.

HS-PDSCH receive processor 40 has despreader 401, demodulator 402, decoder 403, and determiner 404, and performs receive processing on the HS-PDSCH transmitted from the base station. The HS-PDSCH carries packet data formed with information bits. In accordance with the spreading code information from determiner 504, despreader 401 despreads the HS-PDSCH. The HS-PDSCH after the despreading is demodulated in demodulator 402 in accordance with the modulation scheme information from determiner 504 and decoded in decoder 403 in accordance with the coding information from determiner 504, and the decoding result (i.e. packet data) is inputted in error detector 404. Error detector 404 performs error detection such as CRC with the packet data inputted. Error detector 404 then generates an ACK signal or a NACK signal depending on the error detection result and inputs the signal in transmitter 80. When the packet data contains no error and is good, error detector 404 generates and inputs to transmitter 80 an ACK signal as a response signal for the error detection. When the packet data contains an error and is no good, error detector 404 generates and inputs to transmitter 80 a NACK signal as a response signal for the error detection. Transmitter 80 transmits the ACK signal or NACK signal to the base station via the HS-DPCCH.

CQI generator 60 has CPICH despreader 601, SIR measurer 602, and CQI selector 603, and, generates CQIs according to downlink transmission quality under control of controller 72. CPICH despreader 601 despreads the CPICH using a predetermined spreading code. The CPICH carries the pilot signal. The CPICH after the spreading is inputted into SIR measurer 602. SIR measurer 602 measures the SIR (Signal to Noise Ratio) as the reception quality of the pilot signal, and inputs the SIR value in CQI selector 603. CQI selector 603 has a table in which multiple SIR values and CQIs are associated. With reference to this table, CQI selector 603 selects a CQI associated with the SIR value inputted from SIR measurer 602 and inputs this CQI in transmitter 80. The receive SIR value of the pilot signal represents downlink transmission quality. Accordingly, when a great SIR value is measured, a CQI that is associated with a high transmission rate is selected. Transmitter 80 transmits the inputted CQI to the base station via the HS-DPCCH under control of controller 72.

DPCH despreader 70 despreads the DPCH using a predetermined spreading code. The DPCH carries signaling fromhigher layers. By means of this signaling, the mobile station is reported the count of ACK or NACK signal retransmission, gap timing on uplink channels in compressed mode (start timing and gap length), the timing the HSDPA serving cell changes, and the timing the base station of the HSDPA serving cell changes transmit diversity mode. The DPCH after the despreading is inputted in signaling detector 71. According to the above-described signaling in the despread DPCH, signaling detector 71 detects the timing the HSDPA serving cell changes--that is, the timing the base station of CQI transmission destination changes--and reports this change timing to controller 72. Signaling detector 71 reports the timing the change timing was detected ("detection timing") to controller 72.

Controller 72 first determines whether the change timing detected in signaling detector 71 is between the SIR measurement start timing in SIR measurer 602 and the CQI transmission end timing in transmitter 80. Controller 72 learns the SIR measurement period in SIR measurer 602 and the CQI transmission timing in transmitter 80 from reports from CQI generator 60 and transmitter 80. When the change timing is detected between the SIR measurement start timing and CQI transmission end timing, controller 72 controls CQI generating in CQI generator 60 and CQI transmission in transmitter 80 based on the detection timing in signaling detector 71, as will be described below. When the change timing does not come between the SIR measurement start timing and the CQI transmission end timing, controller 72 has CQI generator 60 and transmitter 80 generate and transmit CQIs following normal procedures.

If the detection timing in signaling detector 71 comes before the SIR measurement start timing in SIR measurer 602, this means that the SIR is yet to be measured, and controller 72 has CQI generator 60 generate a CQI for the base station of the HSDPA serving cell after the change. That is, controller 72 commands CPICH despreader 601 to despread the CPICH of the HSDPA serving cell after the change. With this command, the pilot signal for the HSDPA serving cell after the change is inputted in SIR measurer 602, and SIR measurer 602 measures the SIR of the HSDPA serving cell after the change. CQI selector 603 selects the CQI for the HSDPA serving cell after the change and inputs the CQI in transmitter 80. Controller 72 has transmitter 80 transmit the CQI to the base station of the HSDPA serving cell after the change.

When the detection timing in signaling detector 71 comes between the measurement start timing in SIR measurer 602 and the CQI transmission end timing in transmitter 80, this means that the SIR measurement has been started with respect to the HSDPA serving cell before the change and the SIR of the HSDPA serving cell after the change cannot be measured, and so controller 72 makes transmitter 80 hold transmitting the CQI. When the CQI is being transmitted, the transmission is disrupted in the middle.

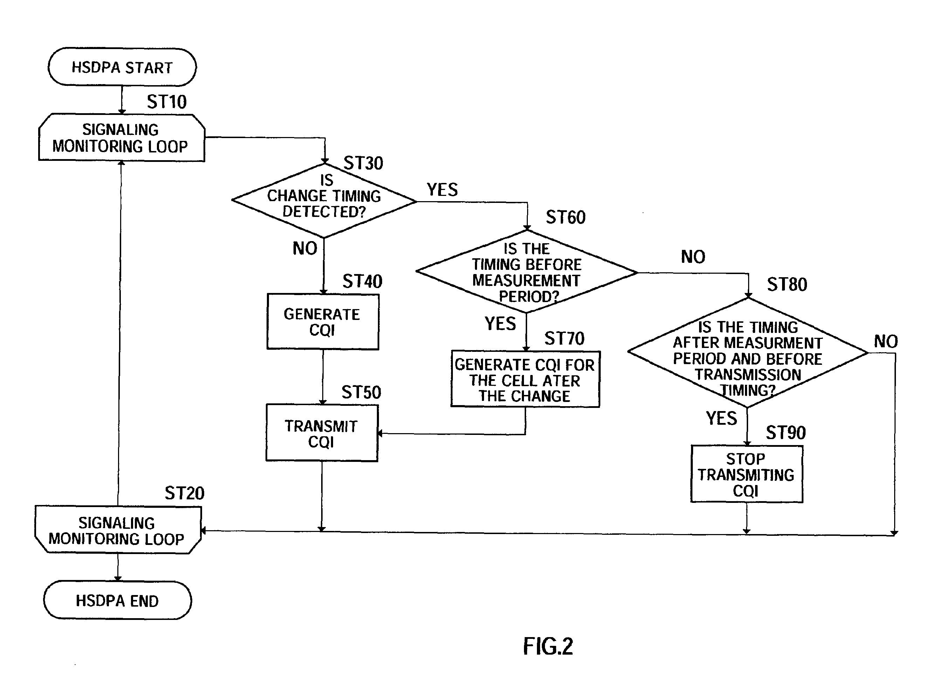

Next, the process flow of the mobile station according to the present embodiment will be described below with reference to FIG.2. Once HSDPA starts, the mobile station repeats the series of processing from step (hereinafter "ST") 10 to ST20 (i.e. monitoring loop for signaling from higher layers) until HSDPA ends. In this signaling monitoring loop, the mobile station monitors signaling from higher layers. When the timing the HSDPA serving cell changes is reported in this signaling and is detected (ST30 "YES"), the process proceeds to ST60. When the change timing is not detected (ST30 "NO"), the CQI is generated (ST40) and transmitted (ST50) following normal procedures. After the transmission, the process returns to ST20 and continues monitoring the signaling.

ST60 compares the timing the change timing was detected (i.e. detection timing) and the SIR measurement period. If the detection timing precedes the SIR measurement period, that is, if the detection timing precedes the measurement start timing (ST60 "YES"), the CQI is generated with respect to the base station of the HSDPA serving cell after the change (ST70) and transmitted to the base station of the HSDPA serving cell after the change (ST50). After the transmission in ST20, the process returns to ST20 and continues monitoring the signaling. On the other hand, if the detection timing comes after the measurement start timing (ST60 "NO"), the process proceeds to ST80.

ST80 then compares the detection timing and the CQI transmission timing. Then, when the detection timing comes after the measurement start timing and before the CQI transmission end timing (ST80 "YES"), the CQI transmission is held (ST90). After the transmission is held, the process proceeds to ST20 and continues monitoring signaling. On the other hand, when the detection timing comes after the CQI transmission end timing (ST80 "NO"), the process proceeds to ST20 and continues monitoring signaling.

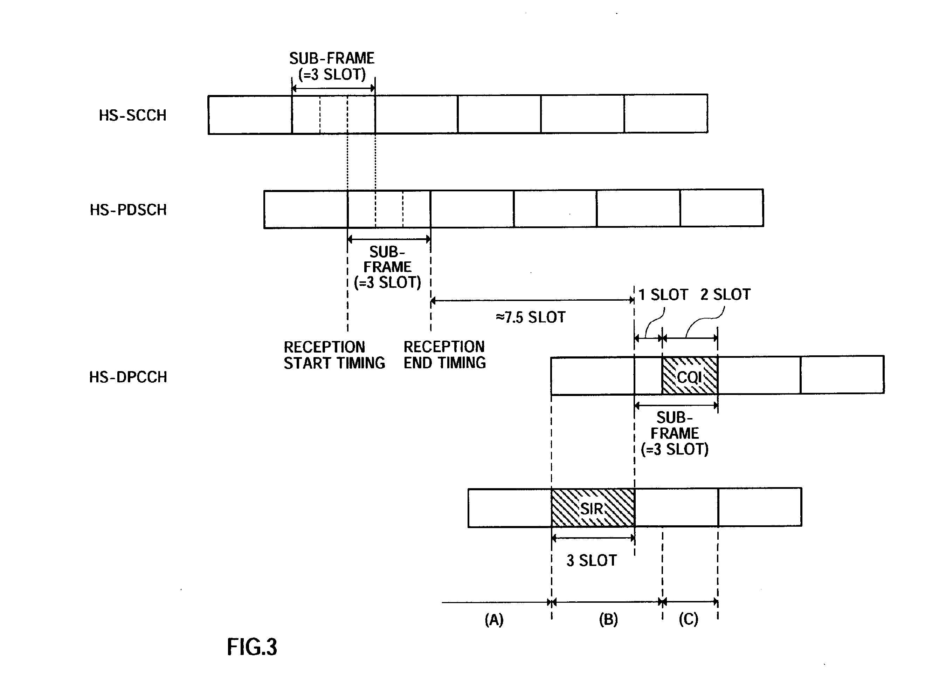

Next, the transmission and reception timing relationships between the channels transmitted and received by the mobile station of the present invention. HS-SCCH sub-frames and HS-PDSCH sub-frames are formed with three slots each. The relationship between an HS-PDSCH and the HS-SCCH associated with the HS-PDSCH (i.e. HS-SCCH carrying control information that is necessary for reception of the HS-PDSCH), the first slot in an HS-PDSCH sub-frame overlaps with the last slot in an HS-SCCH sub-frame. In other words, at the timing one slot before an HS-SCCH sub-frame reception end timing, a sub-frame of the HS-PDSCH associated with the HS-SCCH starts being received. The SIR measurement period in the CPICH and HS-DPCCH sub-frames for used in CQI transmission have correspondence relationships as shown in FIG.3. That is, when an SIR measurement in a three-slot period ends in the CPICH, a CQI is transmitted using the last two slots in an HS-DPCCH sub-frame. The SIR measurement period is shown to be three slots only for the sake of example, and the length of the SIR measurement period is by no means limited to this. In addition, the mobile station detects the timing to change the HSDPA serving cell in accordance with signaling from higher layers in parallel with HS-SCCH and HS-PDSCH reception. When the change timing comes between the SIR measurement start timing and the CQI transmission end timing, CQI generating and transmission are controlled depending on the detection timing (A)-(C).

That is to say, if the detection timing is in period (A)--that is, if the detection timing comes before the SIR measurement period--the CQI is generated with respect to the base station of the HSDPA serving cell after the change. If the detection timing is in period (B)--that is, if the detection timing comes between the SIR measurement start timing and the CQI transmission start timing--the CQI is not transmitted. If the detection timing is in period (C) --that is, if the detection timing comes while the CQI is being transmitted--the transmission of the CQI is disrupted in the middle.

Thus, the present invention is designed to stop generating and transmitting purposeless CQIs, thereby reducing power consumption by reducing wasteful power consumption in the mobile station and reducing interference against other mobile stations.

The present application is based on Japanese PatentApplicationNo.2003-290700, filed August 8, 2003, entire content of which is expressly incorporated herein by reference.

### Industrial Applicability

The present invention is applicable for use in a mobile station apparatus used in a mobile communication system of a W-CDMA scheme.

## Claims

1. A mobile station apparatus comprising:
a generator that generates a downlink channel quality indicator based on reception quality of a received signal;
a transmitter that transmits the downlink channel quality indicator;
a detector that detects a change timing a base station apparatus of a destination of the downlink channel quality indicator changes from a first base station apparatus to a second base station apparatus; and
a controller that controls one or both of the generating process in the generator and the transmission process in the transmitter according to a detection timing in the detector, when the change timing comes between a measurement start timing of the reception quality and a transmission end timing of the downlink channel quality indicator.

2. The mobile station apparatus of claim 1, wherein, when the detection timing comes before the measurement start timing, the controller has the generator generate the downlink channel quality indicator for the second base station apparatus and has the transmitter transmit the downlink channel quality indicator to the second base station apparatus.

3. The mobile station apparatus of claim 1, wherein, when the detection timing comes between the measurement start timing and the transmission end timing, the controller has the transmitter stop transmitting the downlink channel quality indicator.

4. A channel quality indicator control method comprising the steps of:
(a) generating a downlink channel quality indicator based on reception quality of a received signal;
(b) transmitting the downlink channel quality indicator;
(c) detecting a change timing a base station apparatus of a destination of the downlink channel quality indicator changes from a first base station apparatus to a second base station apparatus; and
(d) controlling one or both of the step (a) and the step (b) according to a detection timing in the step (c), when the change timing comes between a measurement start timing of the reception quality and a transmission end timing of the downlink channel quality indicator.
